# EUROPEAN PATENT SPECIFICATION

(11) **EP 1 628 047 B1**
(45) Date of publication and mention of the grant of the patent: **23.04.2008**
(21) Application number: 05255004.3
(22) Date of filing: 11.08.2005
(51) Int. Cl.: F16H 59/02, G05G 1/08, F16H 61/12

(54) **Selector mechanism for a motor vehicle transmission**
Wähleinrichtung für ein Kraftfahrzeuggetriebe
Mécanisme de séléction pour transmission de véhicule motorisé

(30) Priority: 18.08.2004 GB 0418358
(43) Date of publication of application: 22.02.2006
(73) Proprietor: Ford Global Technologies, LLC, Dearborn, MI 48126 (US)
(72) Inventor: Pickering, Carl Anthony, Kenilworth, Warwickshire CV8 2HU (GB); Whelan, Alister, Leamington Spa, Warwickshire CV31 3BU (GB)
(74) Representative: Gicquel, Olivier Yves Gérard

(56) References cited:
- EP-A- 1 443 533
- DE-A1- 19 645 675
- DE-A1- 19 747 269
- US-A1- 2004 045 391

## Description

The present invention relates to a selector mechanism for a motor vehicle transmission, more specifically an automatic or semi-automatic vehicle transmission actuated by shift-by-wire, as known from US-A-2004/0045391.

A selector mechanism generally comprise a selector connected to position sensors so as to select a selector mode, for instance Park (P), Reverse (R), Neutral (N) or Drive (D). The position sensors are connected to a transmission control unit supplying control signals to an actuator such as a solenoid and a motor in order to drive a transmission in accordance with output signals from the position sensors. Such vehicle transmissions when operated by shift-by-wire commonly include a wide variety of sensors, switches, and other controls. In the event that any of these components fail, the transmission may fail to function. If such a failure is detected, the transmission control unit switches to a failure or 'limp home' mode which is designed to ensure that, as far as possible, the vehicle will be drivable and safe. Generally in this mode the transmission control will attempt to maintain the current gear and the failure is indicated to the driver by means of a warning light or text message.

Despite the various warning alerting the driver that the transmission is in limp-home mode it is still possible for the selector to be moved to a position to select an inappropriate selector mode, possibly causing immediate and unexpected motion of the vehicle.

According to the particular type of selector mechanism, several solutions have been proposed to overcome this problem. One solution is disclosed on the Aston Martin™ DB9™ where the selector takes the form of individual switches on the dashboard, each for selecting an operating mode for the transmission. In this solution, the transmission control unit stops the engine if the driver selects an operating mode which is not available. In the other forms of selector, i.e. a lever or a rotary switch, the driver must move the selector through a Neutral position to get a Drive position or a Reverse position. In such cases, if the transmission is in limp-home mode and the driver moves the selector towards a mode which is unavailable the transmission control unit will shift the transmission to Neutral. Both of these known types of solution have certain inherent disadvantages for driver convenience and safety.

The present invention has as an object the provision of an improved selector mechanism for a vehicle transmission having an improved interaction with the driver when the transmission is in a limp-home mode.

According to a first aspect of the invention there is provided a selector mechanism for vehicle transmission driven by an engine, the said selector mechanism having a housing, a selector movable in the housing between a number of selector positions each associated with a respective operating mode of the transmission, sensors for sensing the position of the selector and generating selector signals to a transmission control unit which in use supplies control signals to the transmission, and a retractor actuator which in use is controlled by the transmission control unit to displace the selector between an active position where it can be manually moved between the selector position by the driver of the vehicle, and an inactive position in which it is retracted inside the housing where it cannot be readily moved by the driver.

Conveniently, the selector is a rotary switch.

Preferably, the selector mechanism further comprising a drive means which in use is connected to the transmission control unit to move the selector from a selector position selected by the driver to another selector position representative of the operating mode of the transmission.

Preferably, the drive means is operable to prevent manual movement of the selector according to the state of the vehicle, i.e. in Park position.

The invention also provides, according to second aspect threreof, a transmission control system for a motor vehicle transmission having a transmission control unit which in use is connected to a communication port at which data relating to the vehicle's operation are available and including a selector mechanism which is in accordance with said first aspect.

The invention also provides, according to a third aspect thereof, a method of controlling a selector mechanism according to said first aspect when .installed in a motor vehicle, and the transmission control unit is in receipt of a data relating to the operational state of the vehicle, in which, if the transmission control unit detects or receives a failure signal, the transmission control unit sends a command to the retractor actuator to move the selector towards the inactive position from the active position.

Preferably, the method includes sending a command from the transmission control unit to the retractor actuator to move the selector to the active position when the engine is running and to move the selector to the inactive position when the engine is stopped.

Also preferably, when the selector mechanism includes a drive means, the transmission control unit determines after receiving a signal of the sensors, whether the selector mode is available and if the selector mode is unavailable the transmission control sends a command to the drive means to return the selector to the previous gear position.

The invention will now be described by way of example with reference to the accompanying drawings, of which: -
Fig.1 is perspective view showing a selector for a vehicle transmission according to the present invention located in a console between the front seats of a vehicle passenger compartment, the selector being shown in an active position;
Fig.2 is a partial view of Fig.1 showing the selector in a inactive position, and
Fig.3 is a block diagram showing a transmission control system of a motor vehicle equipped with a selector mechanism according to the present invention.

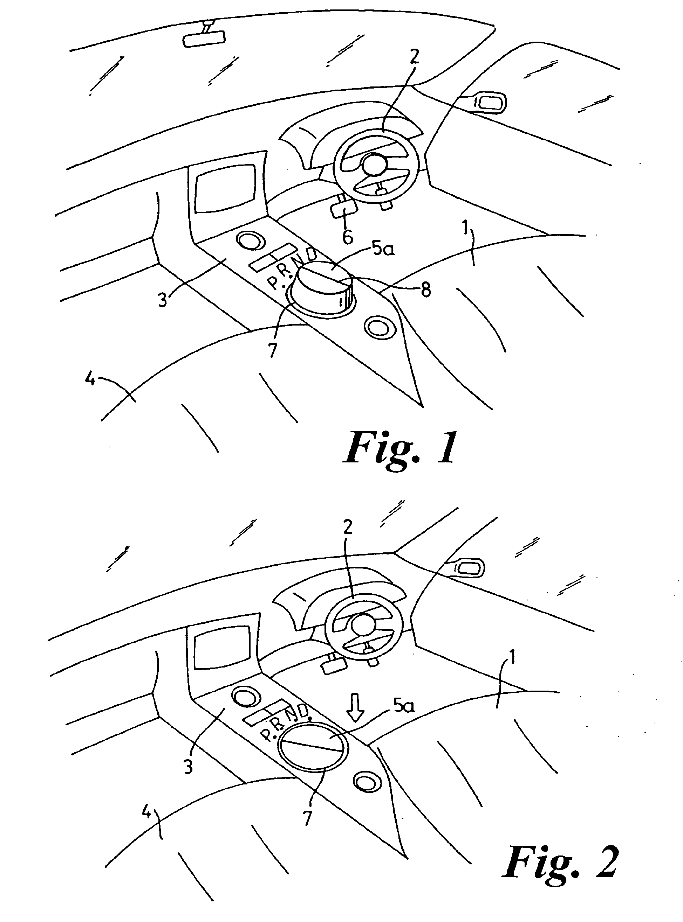

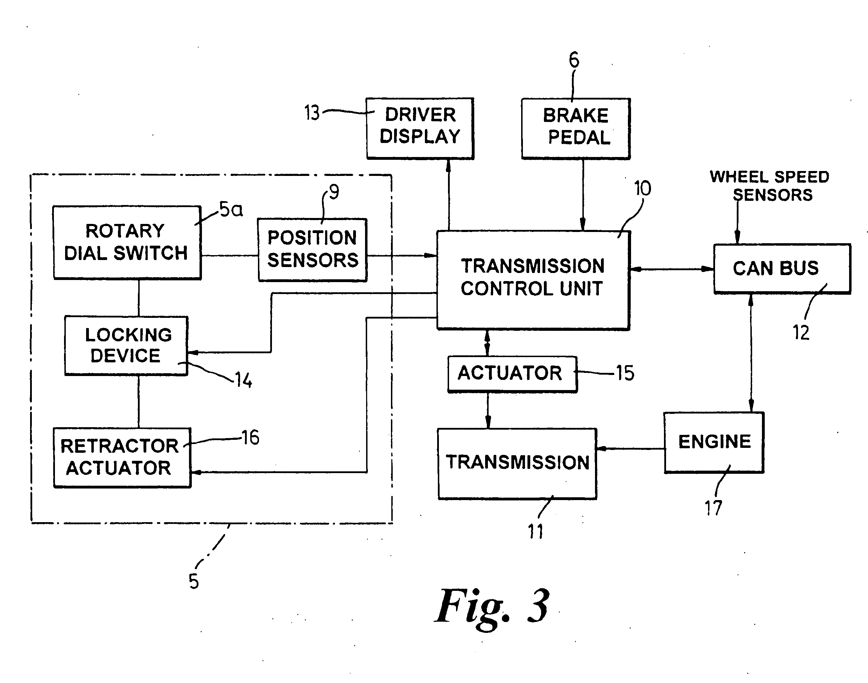

Referring to the drawings, in particular Figs. 1 and 2, there is shown a motor vehicle front passenger compartment having a driver's seat 1, a steering wheel 2 and a centre console 3 mounted between the driver's seat 1 and a passenger seat 4. Located in the upper surface of the console 3 is a selector mechanism 5 for actuating an automatic vehicle transmission 11 which is mounted to the vehicle and driven by an engine 17 (Fig.3). The vehicle comprises also a brake pedal 6 located in front of the driver's seat 1 and a device for starting the engine (not shown).

The selector mechanism 5 includes a housing 7 forming part of the console 3 and a rotary switch 5a with a pointer 8. The rotary switch 5a can be grasped by the driver and rotated around a vertical axis so that to select the operating mode of the transmission by pointing the pointer 8 towards indicia constituting the letters PRND corresponding to Park (P), Reverse (R), Neutral (N) and Drive (D) modes respectively in the automatic transmission. These selection positions are arranged in a semicircle around the vertical axis of rotation of the rotary switch 5a.

As show in Fig.3, the rotary switch 5a is connected to position sensors 9 such as electrical contactors which are mounted in the housing 7 in order to detect a position of the rotary switch 5a and to transmit an input to a transmission control unit 10. The transmission control unit 10 includes a known processing logic circuit which is utilized for effecting automatic gear shifts within the transmission 11 in a known manner.

The transmission control unit is connected to a CAN bus 12 which allows it to communicate with other control units located in the vehicle, e.g. an engine control unit. In particular, each system makes available on the CAN bus data from the sensors associated with it, data relating to its own operation and data relating to the vehicle's operation which it has derived from the information available to it. Therefore the transmission control unit receives over the CAN bus the signals from wheel speed sensors and the brake pedal.

Conventionally the transmission control unit 10 is also connected to a driver display 13 in order to indicate the currently engaged gear of the transmission and possibly any fault of the transmission.

The rotary switch 5a includes a locking device 14 controlled by the transmission control unit 10 for preventing rotary switch 5a movement in any selecting position if the brake pedal 6 is not depressed, in particular when the rotary switch 5a is in Park position.

The transmission control unit 10 and the selector mechanism 5 as so far described are conventional.

Thus, from a Park position of the selector switch 5a, when the driver depresses the brake pedal 6, a brake detection signal is sent over the CAN bus 12 and receiving by the transmission control unit 10 which unlocks the rotary switch 5a so that the driver can select an appropriate transmission mode. When the new position of the rotary switch 5a is detected the transmission control unit 10 checks the availability of the request and shifts the transmission by sending a command to an actuator 15.

If there is a failure of a component or system on the vehicle that prevents all the gears being used, then the transmission control unit 10 switches to a failure or 'limp home' mode which is designed to ensure that, as far as possible, the vehicle will be drivable and safe. In this limp-home mode the transmission control unit 10 sends a warning to the driver display 13 and only the current gear ratio is available or Neutral.

It will be appreciated that under such circumstance, the driver can still move the rotary switch 5a. This can lead the driver to think that a new selection mode, for instance Reverse, is available. Such operation of the switch 5a can lead to unexpected and possibly dangerous motion of the vehicle. To overcome this problem, the selector mechanism 5 includes an actuator, conveniently referred to as the retractor actuator 16, e.g. an electric motor, controlled by the transmission unit control 10 that enables to retract the rotary switch 5a inside the housing 7 into an inactive position, as show Fig.2, where it cannot be readily moved by the driver. Thus, the driver can physically understand that the vehicle is in a failure mode and is discouraged from driving the vehicle for long periods in a faulty condition.

The retractor actuator 16 may also be controlled by the transmission control unit 10 when the engine 17 is started or stopped. Starting the engine causes the rotary switch 5a to rise from the housing 7 (Fig.1) while stopping the engine causes the rotary switch 5a to drop into the housing 7 (Fig. 2). Thus, the selector 5a can be displaced either to an inactive position in which it is retracted inside the housing 7 when the driver turns the engine ignition off or an active position in which it is projects outside the housing 7 when the driver turns the engine ignition on.

The selector mechanism 5 may also include a second actuator or drive means for rotating the rotary switch 5a in cases where an inappropriate selector mode position (PRND) has been selected by the driver. Thus, when the driver selects a required mode by actuating the rotary switch 5a, the position sensor 9 sends a signal to the transmission control unit 10. If the transmission control unit 10 accepts the request, then the transmission 11 mode is changed accordingly. If the transmission control unit 10 rejects the request then it sends a signal to the second actuator to rotate the rotary switch 5a to the previous position (PRND). For example, if Reverse is selected when the vehicle is moving forward, the transmission control unit 10 sends a command to the retractor actuator 16 to return the selector 5a to the previous mode.

This method of controlling the rotary switch 5a enables the provision of a shift-by-wire selector which has multi-stable positions giving, from the driver's viewpoint, a selector mechanism close to the conventional automatic transmission selector lever.

In a modification, function of the locking device 14 is achieved by the second actuator. For this purpose, the actuator can be an electric motor which is either energised to prevent the rotation of the rotary switch 5a or de-energised to enable rotation.

Although the selector as described in the present example is a rotary switch comprising a PRND selector, it will be appreciated that a manual mode position M can be added. In the manual mode position M the gear ratios can be controlled in a pulse manner, e.g. by a pair of paddles located near the steering wheel, to select engage the next highest (+) or lowest (-) forward gear ratio. It will be noted in case where the rotary switch includes a manual mode position M, the transmission control unit may send a command to the drive means so as to rotate the rotary switch from a Drive position mode to a manual position mode when the driver starts to use the paddles. Also, the rotary switch could be replaced by a lever moving about a horizontal axis, e.g. in a fore and aft plane. Furthermore, the selector mechanism could include other functions mounted in the same housing, e.g. an engine start button or a driving mode selector (casual driving, highway driving, driving on snow, etc.).

## Claims

1. A selector mechanism (5) for vehicle transmission (11) driven by an engine (17), the said selector mechanism (5) having a housing (7), a selector (5a) movable in the housing (7) between a number of selector positions each associated with a respective operating mode of the transmission and sensors (9) for sensing the position of the selector (5a) and generating selector signals to a transmission control unit (10) which in use supplies control signals to the transmission (11), the selector (5a) being displacable between an active position where it can be manually moved between the selector position by the driver of the vehicle, and an inactive position in which it is retracted inside the housing (7) where it cannot be readily moved by the driver, **characterized in that** the selector mechanism (5) further comprises a retractor actuator (16) which in use is controlled by the transmission control unit (10) to displace the selector (5a) between said active position and said inactive position

2. A selector mechanism as claimed in claim 1, in which the selector (5a) is a rotary switch.

3. A selector mechanism as claimed in claim 1 or claim 2, and further comprising a drive means which in use is connected to the transmission control unit (10) to move the selector (5a) from a selector position selected by the driver to another selector position representative of the operating mode of the transmission.

4. A selector mechanism as claimed in claim 3, in which the drive means is operable to prevent manual movement of the selector (5a).

5. A transmission control system for a motor vehicle transmission (11) having a transmission control unit (10) which in use is connected to a communication port (12) at which data relating to the vehicle's operation are available and including a selector mechanism (5) which is in accordance with any one of claims 1 to 4.

6. A method of controlling a selector mechanism (5) as claimed in any claims 1 to 4 when installed in a motor vehicle and the transmission control unit (10) is in receipt of a data relating to the operational state of the vehicle, in which, if the transmission control unit (10) detects or receives a failure signal, the transmission control unit (10) sends a command to the retractor actuator (16) to move the selector (5a) towards the inactive position from the active position.

7. A method as claimed in claim 6, including sending a command from the transmission control unit (10) to the retractor actuator (16) to move the selector (5a) to the active position when the engine is running and to move the selector (5a) to the inactive position when the engine (17) is stopped.

8. A method as claimed in claim 6 or 7 when the selector mechanism (5) is according to claim 3 or claim 4 in which the transmission control unit (10) determines, after receiving a signal of the sensors (9), whether the selector mode is available and if the selector mode is unavailable the transmission control (10) sends a command to the drive means to return the selector to the previous gear position.

## Patentansprüche

1. Wählschaltermechanismus (5) für eine von einem Motor (17) angetriebene Fahrzeugkraftübertragung (11), wobei der Wählschaltermechanismus (5) mit einem Gehäuse (7), einem Wählschalter (5a), der im Gehäuse (7) zwischen einer Anzahl von Wählschalterpositionen bewegbar ist, die jeweils einem jeweiligen Betriebsmodus der Kraftübertragung zugeordnet sind, sowie mit Sensoren (9) zum Abfühlen der Position des Wählschalters (5a) und zum Erzeugen von Wählschaltersignalen an eine Kraftübertragungssteuereinheit (10) ausgestattet ist, die im Gebrauch Steuersignale an die Kraftübertragung (11) sendet, wobei der Wählschalter (5a) zwischen einer aktiven Position, in der er vom Fahrer des Fahrzeugs manuell zwischen den Wählschalterpositionen bewegt werden kann, und einer inaktiven eingezogenen Position, in der er sich im Inneren des Gehäuses (7) befindet, wo er vom Fahrer nicht mehr ohne Weiteres bewegt werden kann, verschiebbar ist, **dadurch gekennzeichnet, dass** der Wählschaltermechanismus (5) weiterhin einen Einziehbetätiger (16) umfasst, der im Gebrauch von der Kraftübertragungssteuereinheit (10) gesteuert wird, um den Wählschalter (5a) zwischen der aktiven Position und der inaktiven Position zu verschieben.

2. Wählschaltermechanismus nach Anspruch 1, bei dem der Wählschalter (5a) ein Drehschalter ist.

3. Wählschaltermechanismus nach Anspruch 1 oder Anspruch 2, der weiterhin ein Antriebsmittel umfasst, das im Gebrauch mit der Kraftübertragungssteuereinheit (10) verbunden ist, um den Wählschalter (5a) aus einer vom Fahrer gewählten Wählschalterposition in eine andere Wählschalterposition zu bewegen, die für den Betriebsmodus der Kraftübertragung repräsentativ ist.

4. Wählschaltermechanismus nach Anspruch 3, bei dem das Antriebsmittel dazu verwendet werden kann, ein manuelles Bewegen des Wählschalters (5a) zu verhindern.

5. Kraftübertragungssteuersystem für eine Kraftfahrzeugkraftübertragung (11), das mit einer Kraftübertragungssteuereinheit (10) ausgestattet ist, die im Gebrauch mit einem Datenanschluss (12) verbunden ist, an dem den Fahrzeugbetrieb betreffende Daten zur Verfügung stehen, und einen Wählschaltermechanismus (5) beinhaltet, der einem der Ansprüche 1 bis 4 entspricht.

6. Verfahren zum Steuern eines Wählschaltermechanismus (5) nach einem der Ansprüche 1 bis 4, wenn ein solcher in einem Kraftfahrzeug installiert ist und die Kraftübertragungssteuereinheit (10) den Betriebszustand des Fahrzeugs betreffende Daten erhält, wobei, wenn die Kraftübertragungssteuereinheit (10) ein Ausfallsignal ermittelt oder erhält, die Kraftübertragungssteuereinheit (10) einen Befehl an den Einziehbetätiger (16) sendet, um den Wählschalter (5a) aus der aktiven Position heraus hin zur inaktiven Position zu bewegen.

7. Verfahren nach Anspruch 6, das das Senden eines Befehls von der Kraftübertragungssteuereinheit (10) an den Einziehbetätiger (16) beinhaltet, um den Wählschalter (5a) in die aktive Position zu bewegen, wenn der Motor läuft, und den Wählschalter (5a) in die inaktive Position zu bewegen, wenn der Motor (17) ausgeschaltet wird.

8. Verfahren nach Anspruch 6 oder Anspruch 7, bei dem, wenn der Wählschaltermechanismus (5) dem Anspruch 3 oder Anspruch 4 entspricht, wobei die Kraftübertragungssteuereinheit (10), nachdem sie ein Signal von den Sensoren (9) erhalten hat, bestimmt, ob der Wählschaltermodus verfügbar ist, die Kraftübertragungssteuereinheit (10), wenn der Wählschaltermodus nicht verfügbar ist, ein Signal an das Antriebsmittel sendet, um den Wählschalter in die vorherige Fahrstufenposition zurückzustellen.

## Revendications

1. Mécanisme (5) de sélection pour transmission (11) de véhicule entraîné par un moteur (17), ledit mécanisme (5) de sélection comprenant un boîtier (7), un sélecteur (5a) susceptible d'être déplacé dans le boîtier (7) entre un certain nombre de positions de sélecteur, chacune associée à un mode de fonctionnement correspondant de la transmission et des capteurs (9) destinés à détecter la position du sélecteur (5a) et générant des signaux de sélecteur vers une unité (10) de commande de la transmission qui, en cours d'utilisation, fournit des signaux de commande à la transmission (11), le sélecteur (5a) pouvant être déplacé entre une position active où il peut être déplacé manuellement entre les positions de sélecteur par le conducteur du véhicule, et une position inactive dans laquelle il est rétracté à l'intérieur du boîtier (7) où il ne peut pas être aisément déplacé par le conducteur, **caractérisé en ce que** le mécanisme (5) de sélection comporte en outre un actionneur rétracteur (16) qui, en cours d'utilisation, est commandé par l'unité (10) de commande de la transmission pour déplacer le sélecteur (5a) entre ladite position active et ladite position inactive.

2. Mécanisme de sélection selon la revendication 1, dans lequel le sélecteur (5a) est un commutateur rotatif.

3. Mécanisme de sélection selon la revendication 1 ou la revendication 2, et comportant en outre un moyen d'entraînement qui, en cours d'utilisation, est relié à l'unité (10) de commande de la transmission afin de déplacer le sélecteur d'une position de sélecteur (5a) choisie par le conducteur à une autre position de sélecteur représentative du mode de fonctionnement de la transmission.

4. Mécanisme de sélection selon la revendication 3, dans lequel le moyen d'entraînement peut être actionné pour empêcher un mouvement manuel du sélecteur (5a).

5. Système de commande de transmission pour transmission (11) de véhicule à moteur muni d'une unité (10) de commande de la transmission qui, en cours d'utilisation, est reliée à un port (12) de communication au niveau duquel des données relatives au fonctionnement du véhicule sont accessibles et comprenant un mécanisme (5) de sélection selon l'une quelconque des revendications 1 à 4.

6. Procédé de commande d'un mécanisme (5) de sélection selon l'une quelconque des revendications 1 à 4 lorsqu'il est installé dans un véhicule à moteur et que l'unité (10) de commande de la transmission est destinataire d'une donnée relative à l'état opérationnel du véhicule, dans lequel, si l'unité (10) de commande de la transmission détecte ou reçoit un signal de panne, l'unité (10) de commande de la transmission envoie une commande à l'actionneur rétracteur (16) pour déplacer le sélecteur (5a) de la position active vers la position inactive.

7. Procédé selon la revendication 6, comportant l'étape consistant à envoyer une commande de l'unité (10) de commande de la transmission à l'actionneur rétracteur (16) pour déplacer le sélecteur (5a) vers la position active lorsque le moteur tourne et pour déplacer le sélecteur (5a) vers la position inactive lorsque le moteur (17) est arrêté.

8. Procédé selon la revendication 6 ou 7 lorsque le mécanisme (5) de sélection est en accord avec la revendication 3 ou la revendication 4, dans lequel l'unité (10) de commande de la transmission détermine, après avoir reçu un signal des capteurs (9), si le mode de sélecteur est accessible et, si le mode de sélecteur est inaccessible, la commande (10) de transmission envoie une commande au moyen d'entraînement pour ramener le sélecteur à la position du rapport précédent.
